# EUROPÄISCHE PATENTANMELDUNG

(11) **EP 2 479 355 A1**
(43) Veröffentlichungstag der Anmeldung: **25.07.2012**
(21) Anmeldenummer: 12000067.4
(22) Anmeldetag: 07.01.2012
(51) Int. Cl.: E04B 9/20, E04B 9/18

(54) **Montageelement für Deckeneinbaurahmen eines Bildwandsystems**

(30) Priorität: 20.01.2011 DE 202011001709 U
(71) Anmelder: DDC Design & Development GmbH & Co. KG, 33175 Bad Lippspringe (DE)
(72) Erfinder: Czeczka, Andreas, 33100 Paderborn (DE)
(74) Vertreter: Schober, Mirko

(57) **Zusammenfassung**

Ein Montageelement (1) für den Deckeneinbaurahmen (12) eines Bildwandsystems weist einen Grundkörper (2) mit einer Aufnahme für einen Deckeneinbaurahmen (12) eines Bildwandsystems und mindestens einen Montagepunkt für die Deckenmontage auf. Am Grundkörper (2) ist wenigstens eine Halteeinrichtung (3) angeordnet, die aus dem Bereich des Grundkörpers (2) verlagerbar und arretierbar ist. Dadurch ist die Position mindestens eines Montagepunkts für die Deckenmontage, insbesondere außerhalb des Bereichs des Grundkörpers (2), einstellbar. Es ist eine nachträgliche Justierbarkeit vorgesehen.

## Beschreibung

Die Erfindung betrifft ein Montageelement für Deckeneinbaurahmen eines Bildwandsystems nach dem Oberbegriff des Anspruchs 1, d.h. ein Montageelement für Deckeneinbaurahmen eines Bildwandsystems, das einen Grundkörper mit einer Aufnahme für einen Deckeneinbaurahmen eines Bildwandsystems und mindestens einen Montagepunkt für die Deckenmontage umfasst.

Nach dem Stand der Technik sind für die Montage eines Bildwandsystems an abgehängte Decken spezielle Deckeneinbausysteme vorgesehen. Herkömmliche Deckeneinbausysteme bestehen in der Regel aus Deckenmontageplatten, Gewindestangen und einer Verbindungsplatte oder einem Montagewinkel. Dabei ermöglicht zumindest der Montagewinkel eine vertikale Einstellmöglichkeit des Deckeneinbaukastens.

Nachteil der herkömmlichen Systeme ist, dass nur begrenzte Einstellmöglichkeiten bestehen und dass eine nachträgliche Justierung des Deckeneinbaurahmens nahezu ausgeschlossen ist.

Aufgabe der Erfindung ist es daher, eine Montagevorrichtung für Deckeneinbaurahmen eines Bildwandsystems zu entwickeln, das mindestens einen einstellbaren Montagepunkt für die Deckenmontage aufweist, wobei der Montagepunkt auch außerhalb des Montageelements einstellbar und eine nachträgliche Justiermöglichkeit des Bildwandsystems vorgesehen sein soll. Gelöst wird diese Aufgabe durch ein Montageelement für Deckeneinbaurahmen eines Bildwandsystems gemäß dem Oberbegriff von Anspruch 1 durch die Merkmale des kennzeichnenden Teils von Anspruch 1.

Anspruch 1 sieht ein Montageelement für Deckeneinbaurahmen eines Bildwandsystems vor, das einen Grundkörper mit einer Aufnahme für einen Deckeneinbaurahmen eines Bildwandsystems und mindestens einen Montagepunkt für die Deckenmontage umfasst, wobei am Grundkörper wenigstens eine Halteeinrichtung angeordnet ist, die aus dem Bereich des Grundkörpers verlagerbar und arretierbar ist, wodurch die Position mindestens eines Montagepunkts für die Deckenmontage außerhalb des Bereichs des Grundkörpers einstellbar und wobei eine nachträgliche Justierbarkeit vorgesehen ist.

Die verlagerbare Halteeinrichtung ermöglicht eine einfache Montage des Montageelements an Gewindestangen, die über einen Deckenträger oder eine Deckenmontageplatte variabel an der Decke angeordnet sind. Insbesondere können durch den einstellbaren Montagepunkt die bei der Anordnung der Gewindestangen und der Deckenträger zu berücksichtigenden Gegebenheiten der abgehängten Decke, wie Leitungen, Beleuchtungselemente, Rohre und Kanten, von Segmenten der abgehängten Decke kompensiert werden. Darüber hinaus wird die Möglichkeit einer späteren Justierung ermöglicht. Vor allem können durch die Einstellmöglichkeiten des Montageelements mit einer verlagerbaren Halteeinrichtung kostspielige Demontagen und erneute Montagen einer Bildwand vermieden werden.

Vorteilhafte Ausgestaltungen und Weiterbildungen ergeben sich aus den Unteransprüchen.

Vorteilhaft ist, dass die aus dem Bereich des Grundkörpers verlagerbare Halteeinrichtung als ein an einer Drehachse gelagerter Bügel ausgeführt ist, der aus dem Bereich des Grundkörpers herausschwenkbar ist.

Der herausschwenkbare Bügel ermöglicht eine unkomplizierte Montage des Montageelements an Gewindestangen, die über einen Deckenträger oder eine Deckenmontageplatte an der Decke angeordnet sind. Außerdem ist die Ausrichtung des Montageelements in mehreren Freiheitsgraden möglich, so dass insbesondere nach dem Einbau der Bildwand noch Korrekturen der Ausrichtung vorgenommen werden können und eine nachträgliche Justiermöglichkeit gegeben ist.

Besonders vorteilhaft ist, dass mindestens zwei aus dem Grundkörper herausschwenkbare Bügel am Grundkörper drehbar, vorzugsweise an Schraubgewinden, gelagert sind.

Durch die Verwendung von zwei Bügeln werden insbesondere symmetrische Einstellungen mit gleich weit heraus geschwenkten Bügeln ermöglicht, die in der Regel einfacher vor Ort durchzuführen sind, als wenn nur ein Bügel zur Verfügung steht und jede Schwenkbewegung des Bügels zu einer Verlagerung des Schwerpunkts aus der Projektionsebene der Bildwand heraus führt.

Vorteilhaft ist auch, dass die Bügel außerhalb des Bereichs ihrer Lagerung jeweils zentral angeordnete gebogene, vorzugsweise bananenförmige, Kulissen aufweisen.

Die gebogenen Kulissen ermöglichen eine beliebige Anordnung der Gewindestange durch den Bügel hindurch.

Vorteilhaft ist außerdem, dass der Grundkörper seitliche Ausnehmungen aufweist, aus denen die Halteeinrichtung seitlich verlagerbar ist.

Seitliche Ausnehmungen des Grundkörpers ermöglichen es, die Halteeinrichtung im Inneren des Grundkörpers unterzubringen und trotzdem aus dem Bereich des Grundkörpers heraus verlagern zu können, um einen entsprechenden Montagepunkt setzen zu können. Für Bügel sind auch Schwenkbewegungen aus den seitlichen Ausnehmungen heraus möglich.

Eine weitere vorteilhafte Ausgestaltung sieht vor, dass am Grundkörper mehrere alternative Bohrungen oder Langlöcher zum Einsetzen der Schraubgewinde der Lagerung für die Halteeinrichtung angeordnet sind.

Alternative Bohrungen und Langlöcher erweitern die Einstellmöglichkeiten des Montageelements zusätzlich.

Eine besonders bevorzugte Ausgestaltung sieht vor, dass mindestens eine Ausnehmung am Grundkörper vorgesehen ist, durch die ein oder mehrere Montagepunkte für die Deckenmontage festlegbar sind.

Ausnehmungen am Grundkörper des Montageelements ermöglichen zusätzliche Montagepunkte auch bei eingefahrener Halteeinrichtung bzw. bei eingeklappten oder nur teilweise heraus geschwenkten Bügeln. Die Montage der Gewindestangen kann in diesem Fall durch die obere Seite des Montageelements hindurch erfolgen.

Weitere Eigenschaften, Merkmale und Vorteile der Erfindung werden nachfolgend anhand von Figuren einer bevorzugten Ausführungsform näher erläutert. Im Einzelnen zeigen
- Figur 1 -: eine schematische perspektivische Darstellung des Montageelements für Deckeneinbaurahmen eines Bildwandsystems,
- Figur 2 -: eine schematische perspektivische Darstellung des an einem Deckenträger befestigten Montageelements für Deckeneinbaurahmen eines Bildwandsystems,
- Figur 3 -: eine schematische perspektivische Darstellung des an einem Deckeneinbaurahmen und an einem Deckenträger angebrachten Montageelements für Deckeneinbaurahmen eines Bildwandsystems,
- Figur 4 -: eine schematische perspektivische Darstellung des an einer Rohdecke angebrachten Montageelements für Deckeneinbaurahmen eines Bildwandsystems.

Alle Figuren zeigen eine Ausführungsform des Montageelements 1 für Deckeneinbaurahmen 12 eines Bildwandsystems, bei der die mindestens eine verlagerbare Halteeinrichtung 3 durch zwei verschwenkbare Bügel 3a realisiert ist. Prinzipiell könnten die Halteeinrichtungen auch als Platten ausgeführt sein.

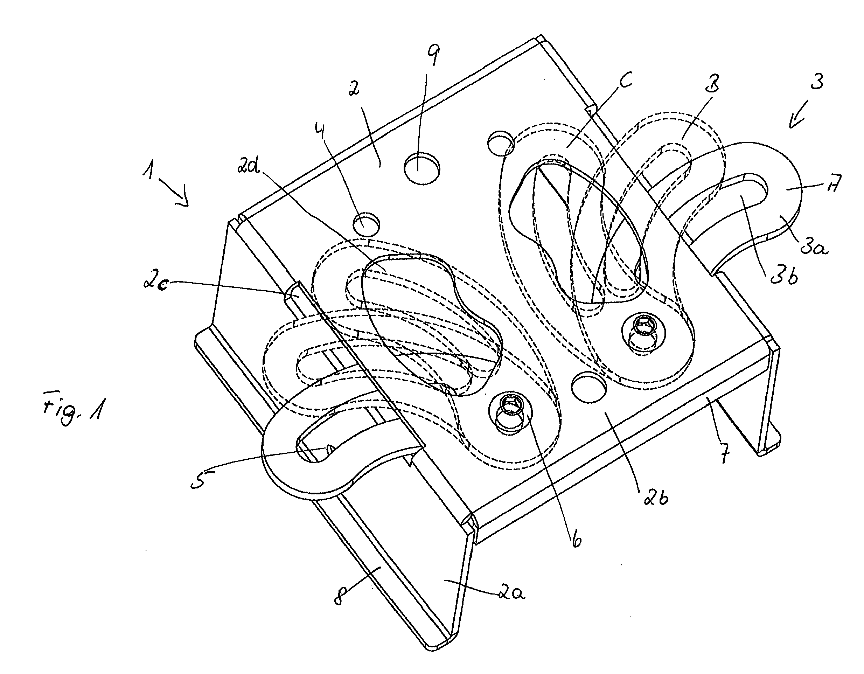

Die Figur 1 zeigt das Montageelement 1 nach einer Ausführungsform der Erfindung mit zwei am Grundkörper 2 angeordneten Bügeln 3a von oben. Die Bügel 3a sind in der gezeigten Ausführungsform mit Schrauben 6 und Schraubenmuttern (in Figur 1 nicht dargestellt) am Grundkörper 2 in Bohrungen 4 drehbar gelagert und arretiert. In der Figur sind mit A, B und C drei unterschiedliche symmetrische Einstellungen der Bügel 3a angedeutet. Die Bügel 3a weisen bananenförmige Kulissen 3b auf, in denen Gewindestangen für die weitere Montage befestigt werden können. Die Bügel 3a ermöglichen daher durch Schwenken, gegebenenfalls in Kombination mit einem Verschieben des Montageelements 1 am Deckeneinbaurahmen (in Figur 1 nicht dargestellt), eine variable Anpassung der Montagepunkte in mehreren Freiheitsgraden. Weitere Bohrungen 5 dienen zum Befestigen des Montageelements 1 am Deckeneinbaurahmen (in Figur 1 nicht dargestellt). Darüber hinaus können Bohrungen 9 vorgesehen sein, die beispielsweise für optionales Zubehör Verwendung finden. Vorzugsweise können auch Ausnehmungen 2d vorgesehen sein, die Montagepunkte bei eingeklappten oder nur teilweise heraus geschwenkten Bügeln 3a im Bereich des Grundkörpers 2 zugänglich machen.

Der Grundkörper 2 hat in der gezeigten Ausführungsform näherungsweise die Form eines Schlittens. An zwei Außenseiten 2a sind umgebogene Schienen 8 angeordnet, die in entsprechende Nuten des Deckeneinbaurahmens einführbar sind und die in der dargestellten Ausführungsform nach außen gerichtet sind. Bei anderen Ausführungsformen können die Schienen 8 auch von den Außenwänden 2a nach innen umgebogen sein. In weiteren Ausführungsformen kann die Aufnahme des Deckeneinbaurahmens auch ausschließlich durch Schrauben erfolgen. Die Oberseite 2b des Grundkörpers 2 kann ebenfalls umgebogene Laschen 7 aufweisen, die den Bewegungsspielraum der unter der Oberseite des Grundkörpers angeordneten heraus schwenkbaren Bügel 3a gewährleisten. Durch diese Anordnung sind die Bügel 3a sowohl von oben als auch von untern geschützt und können insbesondere nicht eingeklemmt werden. Zwischen den Außenflächen 2a und der Oberseite 2b sind seitliche Ausnehmungen 2c vorgesehen, durch die die Bügel 3a geführt werden können. Dies hat den Vorteil, dass die heraus schwenkbaren Bügel 3a unter der Oberseite 2b des Grundkörpers 2 angeordnet und trotzdem schwenkbar sein können. Die dargestellte Ausführungsform des Montageelements 1 kann aufgrund ihres einfachen Aufbaus aus einer einzigen gestanzten Metallplatte durch einfaches Umbiegen der Außenseiten 2a, der Laschen 7 und der Schienen 8 hergestellt werden. Grundsätzlich sind aber auch geschmiedete Ausführungen des Montageelements 1 denkbar.

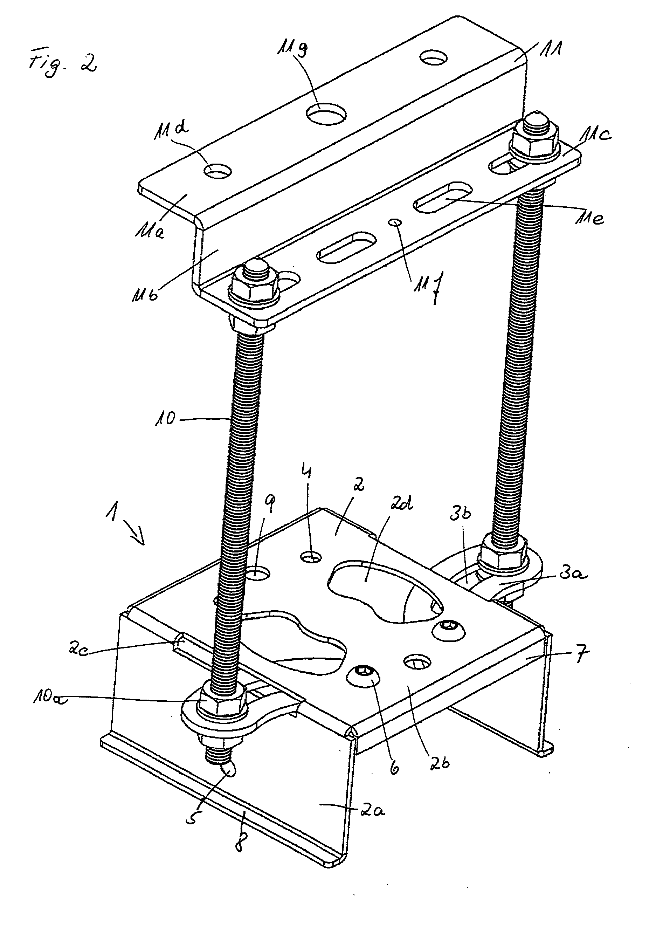

Figur 2 zeigt das an einem Deckenträger 11 über Gewindestangen 10 befestigte Montageelement 1. Diese Darstellung dient der Veranschaulichung und entspricht nicht der vorgesehenen Einbauprozedur, da eigentlich vorgesehen ist, dass das Montageelement 1 mit seinen Schienen 8 in eine Nut (nicht dargestellt) eines Deckeneinbaurahmens (nicht dargestellt) aufgeschoben wird, bevor eine Deckenmontage erfolgt. Bei der gezeigten Ausführungsform sind die Bügel 3a des Montageelements 1 bis zum Anschlag durch die seitlichen Ausnehmungen 2c heraus geschwenkt. Die Montageposition der Bügel 3a wird dabei durch die am Deckenträger 11 befestigten Gewindestangen 10 vorgegeben. Der Deckenträger 11 kann neben der gezeigten Ausführungsform mit drei Abschnitten 11a, 11b, 11c auch planar ausgeführt sein, insbesondere die planare Ausführung wird auch als Deckenmontageplatte bezeichnet. Der gezeigte Deckenträger 11 besteht aus drei Abschnitten: der Deckenauflagefläche 11a für die Befestigung an der Rohdecke (nicht dargestellt), dem Abstandshalter 11b und dem Montageabschnitt 11c zur Befestigung der Gewindestangen 10. Für die Befestigung an der Rohdecke sind beispielsweise Bohrungen 11d, 11g in der Deckenauflagefläche 11a vorgesehen. Die Montage der Gewindestangen 10 erfolgt vorzugsweise in Langlöchern 11e des Montageabschnitts 11c. Neben Langlöchern 11e können aber auch Bohrungen 11f zur Aufnahme der Gewindestangen 10 vorhanden sein. Die Gewindestangen 10 werden mit Schraubenmuttern 10a sowohl in den Langlöchern 11e des Deckenträgers 11 als auch den Kulissen 3a der Bügel 3a des Montageelements 1 fixiert.

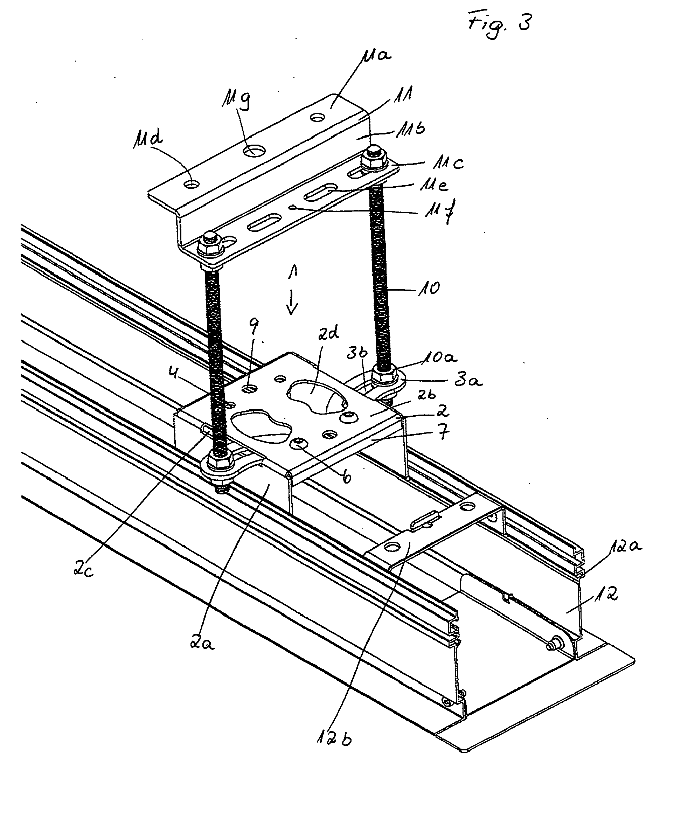

In Figur 3 ist eine Ausführungsform des an einem Deckeneinbaurahmen 12 befestigten Montageelements 1 dargestellt. An die hier nicht dargestellte Rohdecke wird zunächst ein Deckenträger 11 angeschraubt. In Langlöcher 11e des Deckenträger 11 werden Gewindestangen 10 eingeführt und mit Schraubenmuttern 10a fixiert. In der gewünschten Höhe der Gewindestangen 10 werden weitere Schraubenmuttern 10a aufgedreht und anschließend die passend eingestellten Bügel 3a des Montageelements 1 mit Schraubenmuttern 10a verschraubt und arretiert. Auf die Schienen 8 des Grundkörpers 1 wurde bereits vorab der Deckeneinbaurahmen 12 mit hierfür vorgesehenen Nuten 12a aufgeschoben. Üblicherweise ist vorgesehen, dass das Montageelement 1 am Deckeneinbaurahmen 12 zusätzlich mit Schrauben in Bohrungen (nicht dargestellt), die in den Außenwänden 2a angeordnet sind, befestigt ist. Vorzugsweise schließt der Deckeneinbaurahmen 12 mit der sichtbaren Seite der abgehängten Decke 12 ab. In die Nuten 12a des Deckeneinbaurahmens können auch weitere Elemente, wie beispielsweise Halteelemente 12b für die spätere Montage des nicht gezeigten Bildwandgehäuses, aufgenommen werden.

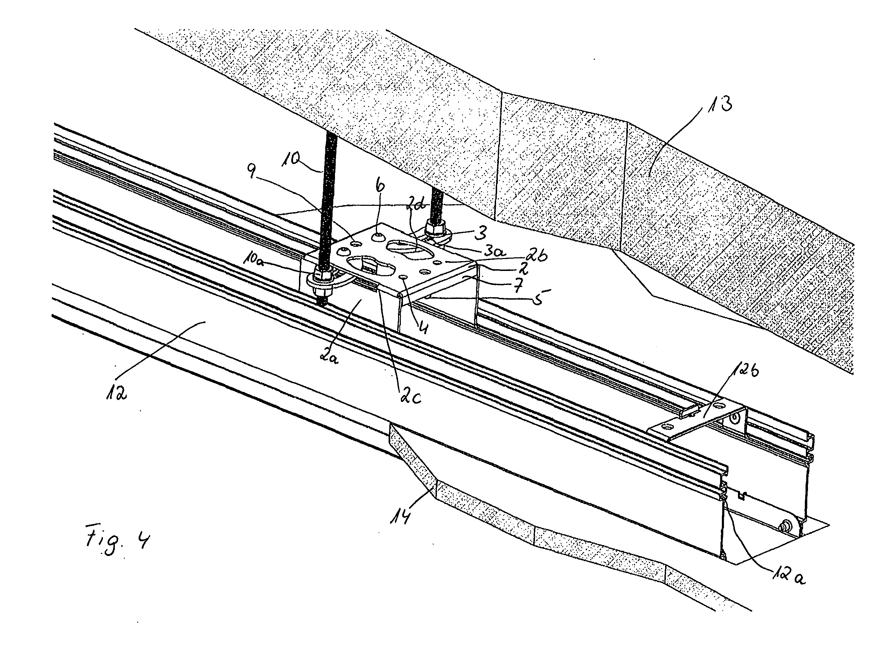

Figur 4 zeigt im Wesentlichen die Darstellung der Figur 3, nur dass in der Figur 4 auch die Rohdecke 13 und die abgehängte Decke 14 dargestellt sind, so dass die konkrete Anordnung des Montageelements 1 innerhalb der "Decke" zwischen abgehängter Decke 14 und Rohdecke 13 deutlich wird. Der Deckenträger (in Figur 4 nicht dargestellt) wird von der eingezeichneten Rohdecke 13 verdeckt. Die Unterseite des Deckeneinbaurahmens 12 schließt bündig mit der Unterseite der abgehängten Decke 14 ab. Der in Figur 4 gezeigte Deckeneinbaurahmen 12 mit dem Montageelement 1 ist prinzipiell bereit für die Aufnahme eines Bildwandgehäuses des Bildwandsystems.

## Patentansprüche

1. Montageelement (1) für Deckeneinbaurahmen (12) eines Bildwandsystems, das einen Grundkörper (2) mit einer Aufnahme für einen Deckeneinbaurahmen (12) eines Bildwandsystems und mindestens einen Montagepunkt für die Deckenmontage umfasst,
**dadurch gekennzeichnet,**
**dass** am Grundkörper (2) wenigstens eine Halteeinrichtung (3) angeordnet ist, die aus dem Bereich des Grundkörpers (2) verlagerbar und arretierbar ist, wodurch die Position mindestens eines Montagepunkts für die Deckenmontage, insbesondere außerhalb des Bereichs des Grundkörpers (2), einstellbar und wobei eine nachträgliche Justierbarkeit vorgesehen ist.

2. Montageelement (1) für Deckeneinbaurahmen (12) eines Bildwandsystems nach Anspruch 1,
**dadurch gekennzeichnet,**
**dass** die aus dem Bereich des Grundkörpers (2) verlagerbare Halteeinrichtung (3) als ein an einer Drehachse gelagerter Bügel (3a) ausgeführt ist, der aus dem Bereich des Grundkörpers (2) heraus schwenkbar ist.

3. Montageelement (1) für Deckeneinbaurahmen (12) eines Bildwandsystems nach Anspruch 2,
**dadurch gekennzeichnet,**
**dass** mindestens zwei aus dem Grundkörper (2) heraus schwenkbare Bügel (3a) am Grundkörper (2) drehbar gelagert sind, wobei die Lagerung vorzugsweise an Schraubgewinden erfolgt und wobei insbesondere die Montagepunkte durch Herausschwenken der Bügel (3a) horizontal, radial und axial einstellbar sind.

4. Montageelement (1) für Deckeneinbaurahmen (12) eines Bildwandsystems nach Anspruch 3,
**dadurch gekennzeichnet,**
**dass** die Bügel (3a) außerhalb des Bereichs ihrer Lagerung jeweils zentral angeordnete gebogene, vorzugsweise bananenförmige, Kulissen (3b) aufweisen.

5. Montageelement (1) für Deckeneinbaurahmen (12) eines Bildwandsystems nach einem der vorangehenden Ansprüche,
**dadurch gekennzeichnet,**
**dass** der Grundkörper (2) seitliche Ausnehmungen (2c) aufweist, aus denen die Halteeinrichtung (3) seitlich verlagerbar ist.

6. Montageelement (1) für Deckeneinbaurahmen (12) eines Bildwandsystems nach einem der vorangehenden Ansprüche,
**dadurch gekennzeichnet,**
**dass** am Grundkörper (2) mehrere alternative Bohrungen (6, 9) oder Langlöcher zum Einsetzen der Schraubgewinde der Lagerung für die Halteeinrichtung (3) angeordnet sind.

7. Montageelement (1) für Deckeneinbaurahmen (12) eines Bildwandsystems nach einem der vorangehenden Ansprüche,
**dadurch gekennzeichnet,**
**dass** mindestens eine Ausnehmung (2d) am Grundkörper (2) vorgesehen ist, durch die ein oder mehrere Montagepunkte für die Deckenmontage festlegbar sind.
